# EUROPÄISCHE PATENTSCHRIFT

(11) **EP 0 848 799 B1**
(45) Veröffentlichungstag und Bekanntmachung des Hinweises auf die Patenterteilung: **21.02.2001**
(21) Anmeldenummer: 96930113.4
(22) Anmeldetag: 28.08.1996
(51) Int. Cl.: F24J 2/24, F24J 2/05

(54) **THERMISCHER SONNENKOLLEKTOR MIT RÖHREN**
THERMAL SOLAR-ENERGY COLLECTOR WITH TUBES
COLLECTEUR SOLAIRE THERMIQUE A TUBES

(30) Priorität: 07.09.1995 DE 19532994; 07.09.1995 DE 19532993
(43) Veröffentlichungstag der Anmeldung: 24.06.1998
(73) Patentinhaber: HORN, Holger, 65388 Schlangenbad (DE); GERLING, Helmut, 47447 Moers (DE)
(72) Erfinder: GERLING, Helmut, D-47447 Moers (DE); HORN, Holger, D-65388 Schlangenbad (DE)
(86) Internationale Anmeldenummer: EP9603775
(87) Internationale Veröffentlichungsnummer: WO9709573

(56) Entgegenhaltungen:
- DE-A- 2 828 226
- DE-A- 3 038 671
- DE-A- 3 103 071
- GB-A- 1 534 848
- GB-A- 2 094 666
- US-A- 4 205 662
- PATENT ABSTRACTS OF JAPAN vol. 9, no. 256 (M-421) [1979] , 15.Oktober 1985 & JP,A,60 105862 (TOSHIBA KK), 11.Juni 1985,

## Beschreibung

Die Erfindung betrifft einen thermischen Sonnenkollektor gemäss Oberbegriff von Anspruch 1.

Bei der direkten und indirekten Nutzung der Sonnenenergie mit thermischen Sonnenkollektoren wird die Strahlungsenergie der Sonne in Wärmeenergie umgewandelt. Die Strahlungsenergie wird durch einen Absorber über dessen absorbierende Beschichtung zumindest teilweise aufgenommen und einem Wärmeübertragungsmedium zugeführt. Das Wärmeübertragungsmedium leitet die Wärme zum Beispiel einem Speicher zu. aus dem nach Bedarf erwärmte Speicherflüssigkeit entnommen werden kann.

Für das Erreichen eines hohen Wirkungsgrads müssen die Wärmeverluste möglichst gering und die Absorptionsleistungen möglichst hoch sein. Ferner ist es nötig, den Sonnenkollektor so auszurichten. daß er ein Maximum an Sonnenstrahlung aufnehmen kann.

Die Größe der Wärmeverluste hängen insbesondere davon ab, wie leicht die durch Absorption entstandene Wärme auf das Wärmeübertragungungsmedium übertragen wird. Die Wärmeverluste sind hoch, wenn der Wärmewiderstand zwischen Entstehungsstelle der Wärme und dem Wärmeübertragungungsmedium hoch ist. Denn das bedeutet, daß eine große Temperaturdifferenz zwischen dem Absorber und dem Wärmeübertragungungsmedium und zwischen dem Absorber und der Umgebung entsteht. Die Höhe des Wärmewiderstands ist dabei proportional der Entfernung zwischen Entstehungsstelle der Wärme und Wärmübertragungungsmedium und umgekehrt proportional dem Wärmeleitfähigkeitskoeffizienten der verwendeten Werkstoffe.

Es gibt verschiedene Absorbertypen für thermische Sonnenkollektoren. Heute werden meist Finnenabsorber oder Plattenabsorber verwendet. Die Finnenabsorber werden in Flachkollektoren oder Röhrenkollektoren eingesetzt.

Die Plattenabsorber besitzen hauptsächlich eine Bedeutung für die Flachkollektoren. Alle thermischen Sonnenkollektoren haben gemeinsam, daß die Beschichtung für die Absorption aus einer schwarzen Farbe oder, wie heute üblich, aus epitaktisch abgeschiedenen Schichtsystemen besteht.

Der Finnenabsorber besteht aus einer Absorberplatte mit einem an der Rückseite aufgelöteten Rohr als Transportkanal für das Wärmeübertragungsmedium. Ein Transport der Nutzenergie erfolgt hier durch Wärmeleitung von der Absorberplatte, dem Verbindungsmaterial zwischen Absorber und Transportkanal durch die Wand des Transportkanals zum Wärmeübertragungsmedium. Da diese Wärmeleitung nicht immer schnell genug erfolgen kann, können Wärmeverluste durch einen Wärmestau auftreten, wobei sich höhere Temperaturen an der Absorberplatte einstellen und dadurch insbesondere an den Randbereichen der Absorberplatte Wärmeenergie wieder an die Umgebung abgegeben wird. Dies führt zu einer Verschlechterung des Wirkungsgrads.

Bei den Plattenabsorbern sind die Wärmeverluste zwar geringer, durch die Plattenkonstruktion lassen sich jedoch speziell an den Randbereichen keine optimalen Durchströmungsbedingungen für das Wärmeübertragungsmedium erreichen. Aus Gründen der mechanischen Stabilität, insbesondere der Druckfestigkeit, wird hier als Werkstoff Edelstahl verwendet. Edelstahl besitzt aber den Nachteil eines relativ geringen Wärmeleitfähigkeitskoeffizienten im Vergleich zu Kupfer.

Der Erfindung liegt die Aufgabe zugrunde, bei thermischen Sonnenkollektoren den Wirkungsgrad zu verbessern.

Ausgehend von dem im Oberbegriff des Anspruchs 1 berücksichtigten Stand der Technik, gebildet durch JP-A-60105862 oder DE-A-3103071, wird diese Aufgabe durch die sich im kennzeichnenden Teil von Anspruch 1 befindlichen Merkmale gelöst.

Ansprüche 2 - 7 betreffen vorteilhafte Weiterbildungen des Gegenstands nach Anspruch 1.

Unter dem Begriff "Röhrchen" sind hier sowohl einzelne Röhrchen als auch Abschnitte eines einzelnen Röhrchens zu verstehen. Der Begriff "Vielzahl" bedeutet hier, daß mehrere Röhrchen im Absorber angeordnet sind, deren genaue Anzahl insbesondere von den Dimensionen des Absorbers abhängig ist und typisch mindestens 10 Röhrchen beträgt. Die optimal geeignete Anzahl der Röhrchen kann darüber hinaus durch wenige, einfache Versuche ermittelt werden. Da die Röhrchen in einem thermischen Kontakt miteinander stehen, wird so eine gleichmäßige Temperaturverteilung des Absorbers erreicht, wodurch der Wirkungsgrad gegenüber vergleichbaren Sonnenkollektoren mit Finnenabsorbem oder Plattenabsorbem deutlich erhöht wird. Es ist besonders vorteilhaft, wenn die Röhrchen durch eine Absorberfolie miteinander verbunden sind, denn so wird gleichzeitig die mechanische Stabilität des Absorbers erhöht. Zur weiteren Verbesserung der mechanischen Stabilität können quer zur Längsrichtung der Röhrchen ein oder mehrere Schweißbänder gelegt werden.

Gemäß einer bevorzugten Ausgestaltung der Erfindung besitzen die Röhrchen für das Wärmeübertragungsmedium einen Außendurchmesser von 2 bis 5 mm und eine Wandstärke von 0,1 bis 0,5 mm. Als Werkstoff für die Röhrchen wird vorzugsweise Kupfer verwendet.

Nach der Erfindung ist die Absorberfolie vorzugsweise auf der Vorderseite und der Rückseite der Röhrchen angeordnet. Es ist vorteilhaft, wenn eine Absorberfolie mit einer hoch selektiven Beschichtung verwendet wird. Derartige Beschichtungen bestehen zum Beispiel aus Schwarzchrom (Chromoxid), Schwarznickel (Nickeloxid), Schwarzkupfer (Kupferoxid) oder Eisenoxid. Diese Oxidschischten können beispielsweise durch Oxidation des entsprechenden Metalls aufgebracht werden. Aber auch das Aufbringen von Oxidschichten auf einer andersartigen metallischen Oberfläche, wie beispielsweise Schwarzchrom auf Nickel, ist möglich. Die Beschichtung von Nickeloxid auf Nickel ist hier besonders bevorzugt.

Es ist nach der Erfindung vorgesehen, daß jeweils das eine Ende eines Röhrchens in einem Sammler für den Zulauf des Wärmeübertragungsmediums und das andere Ende in einem Sammler für den Ablauf des Wärmeübertragungsmediums mündet. Es ist besonders vorteilhaft, wenn in den jeweils zwei benachbarten Röhrchen die Strömungsrichtung des Wärmeübertragungsmediums entgegengesetzt ist. Das bedeutet, daß in dem einen der zwei benachbarten Röhrchen das Wärmeübertragungsmedium hineingeführt und in dem anderen Röhrchen wieder zurückgeführt wird. Durch dieses Gegenstromprinzip wird eine besonders gleichmäßige Temperaturverteilung des Absorbers erreicht und ein relativ hoher Wirkungsgrad des Kollektors erzielt. Die Röhrchen sind ferner vorteilhaft an einem Ende so gebogen, daß der eine Abschnitt des Röhrchens, in dem das Wärmeübertragungsmedium hineingeführt wird, direkt neben dem Abschnitt desselben Röhrchens angeordnet ist, worin das Wärmeübertragungsmedium in entgegengesetzter Strömungsrichtung zurückgeführt wird, wobei die Enden dieses Röhrchens vorteilhaft in je einem Sammler für den Zulauf des Wärmeübertragungsmedium und den Ablauf des Wärmeübertragungsmedium münden, die an einer Seite des Kollektors angeordnet sind.

Gemäß der Erfindung kann die Absorberfläche konkav ausgebildet sein, um eine möglichst große Menge der einfallenden Strahlungsenergie absorbieren zu können. Es ist in speziellen Anwendungsfällen aber ebenso denkbar, daß die Absorberfläche konvex ausgebildet wird, damit der Innenraum des Absorbers möglichst klein ist. Der Raum unterhalb der Absorberfläche kann ferner vorteilhaft mit einer thermischen Dämmung gefüllt sein.

Der erfindungsgemäße Sonnenkollektor ist mit einem Gas einer gegenüber Luft geringeren Wärmeleitfähigkeit gefüllt. Als Füllgase sind Krypton, Xenon, Argon, Kohlendioxyd und deren Gemische für diesen Zweck sehr gut geeignet. Ein Einsatz derartiger Gase ist an sich bekannt, wie beispielsweise die DE 42 17 060 A1 zeigt. Sie dienen dort als wirksamer Ersatz für Luft. Es zeigte sich jedoch, daß beim erfindungsgemäßen Kollektor mit Röhrchenabsorber durch eine derartigen Gasfüllung ein relativ hoher Wirkungsgrad im Vergleich zu Vakuumkollektoren erreicht werden kann. Auf der einen Seite ist der Verlust an Wärme durch Wärmeleitung und Konvektion relativ gering und auf der anderen Seite entfallen hier die speziellen Probleme, die sich bei der Herstellung von Vakuumkollektoren und bei der Aufrechterhaltung des Vakuums über einen langen Zeitraum ergeben. Besonders gut hat sich als Füllgas Krypton bewährt. Es ist nach der Erfindung vorgesehen, daß das Füllgas unter einem geringen Überdruck steht.

Die diffusionsdichte Klebeverbindung sichert eine ausreichende Diffusionsdichtigkeit des Kollektors damit sich der Wirkungsgrad während der Betriebszeit nicht verringert. Als Kleber für die diffusionsdichte Verklebung sind an sich Butylkleber hervorragend geeignet. Bei einer bevorzugten Ausführungsform werden sie durch eine Silikondichtung gestützt. Femer ist es von Vorteil, zwischen den zu verklebenden Bauteilen des Kollektors ein Einlegebauteil anzuordnen, das die Preßkraft beim Zusammenfügen der Bauteile auf den Butylkleber überträgt und zugleich eine weitere Diffusionssperre darstellt. Bei einer Verbindung zwischen Deckel und Röhre eines Röhrenkollektors kann beispielsweise ein Einlegering verwendet. Das Einlegebauteil kann vorteilhaft aus einem metallischen Werkstoff, zum Beispiel Aluminium, bestehen. Bei anderen Werkstoffen bzw. anderen Metallen kann eine andere Kombination von Kleber und Dichtmasse vorteilhaft sein, falls dadurch eine ausreichende Diffusionsdichtigkeit gewährleistet wird. Im Vergleich zu einem herkömmlichen Röhrenkollektor mit angeschmolzenem Glasdeckel ist der technische Herstellungsaufwand bei einer Verklebung der Deckel mit der Röhre deutlich geringer. Insbesondere ist bei einem Anschmelzprozeß der Deckel von herkömmlichen Röhrenkollektoren sowie bei deren späteren Abkühlprozeß der Energieaufwand vergleichsweise hoch. Dadurch sind auch die Herstellungskosten höher als bei einem erfindungsgemäßen Sonnenkollektor mit verklebten Bauteilen.

Es ist nach der Erfindung ferner vorgesehen, daß an dem unteren, der direkten Scnneinstrahlung abgewandten Seite des Sonnenkollektors an dessen Innenseite eine Folie angeordnet ist, welche für die Sonnenstrahlung durchlässig, aber für Wärmestrahlung nicht oder nur gering durchlässig ist. Diese Folie kann durch eine Verklebung oder Verspannung im Gehäuse des Sonnenkollektors angebracht sein. So kann sie an den Deckeln eines Absorbergehäuses eingespannt sein und/oder mit den Gehäusebauteilen verklebt werden. Vorzugsweise werden derartige Folien in Röhrenkollektoren eingebaut, die mit einem Gas befüllt ist, welches eine geringere Wärmeleitfähigkeit als Luft besitzt. Durch den Einbau der Folie kann auch die Rückseite des Absorbers, daß bedeutet die der direkten Sonnenstrahlung abgewandte Seite des Absorbers, zum Sammeln der Energie durch die Sonnenstrahlung genutzt werden. Die Abstrahlungsverluste durch Wärmestrahlung werden andererseits reduziert, wodurch der Wirkungsgrad des Kollektors verbessert wird ohne die Lichtdurchlässigkeit der Oberseite des Sonnenkollektors zu beeinträchtigen. Darüber hinaus kann die Folie an den Enden mindestens einmal gebogen bzw. geknickt sein und der Absorber auf den Entstücken der Folie aufliegen. In vorteilhafter Weise dient die Folie so gleichzeitig als Stütze bzw. Tragbauteil für den Absorber. Bei einem Röhrenabsorber ist die Folie vorzugsweise an den Enden gebogen bzw. geknickt, welche parallel zur Längsrichtung der Röhre verlaufen. Als Folien können beispielsweise Folien aus Polyester mit einer epitaktischen Beschichtung mit Metalloxiden verwendet werden, welche Sonnenstrahlen nahezu ungehindert durchlassen und Wärmestrahlen zumindest teilweise reflektieren.

Nach der Erfindung kann der Sonnenkollektor ferner mit einem Trocknungsmittel zur Aufnahme von Wasserdampf ausgestattet werden, desgleichen kann er mit einem Füllventil versehen werden, um ggf. das Vakuum zu erneuern oder die Gasfüllung zu ergänzen oder auszutauschen. Als Trocknungsmittel kann beispielsweise ein Molsieb verwendet werden. Auf einem oder mehreren Bauteilen des erfindungsgemäßen Sonnenkollektors kann darüber hinaus außen eine thermische Dämmung angeordnet sein, um den Wirkungsgrad des Sonnenkollektors zu verbessern.

Der Sonnenkollektor ist ein Röhrenkollektor. Die Kombination des Röhrchenabsorbers in Verbindung mit einem speziellen Vorteil des Röhrenkollektors, nämlich der Möglichkeit, durch Drehung des Kollektors die Ausrichtung des Winkels zur Sonnenseite nahezu unabhängig vom Azitmutwinkel sehr genau einzurichten, ermöglicht das Erreichen eines relativ hohen Wirkungsgrades.

Der erfindungsgemäße Sonnenkollektor wird anhand von Zeichnungen beispielhaft näher beschrieben.

Es zeigen:
- Fig. 1: einen Röhrenkollektor in perspektivischer Darstellung,
- Fig. 2: einen Schnitt entlang der Linie A-A in Fig. 1,
- Fig. 3: eine vergrößerte Darstellung des Absorbers von Fig. 2,
- Fig. 4: eine Darstellung entsprechend Fig. 2 mit einer anderen Ausbildung des Absorbers,
- Fig. 5: einen Schnitt entlang der Linie B-B in Fig. 1, beschränkt auf die Verklebung zwischen Deckel und Röhre,
- Fig. 6: eine andere Ausbildung der Verklebung entsprechend Figur 5.
- Fig. 7: eine Ausbildung des Absorbers, bei der das Wärmeübertragungsmedium in den Röhrchen in einer Richtung strömt,
- Fig. 8: den Absorbers der Fig. 7 im Querschnitt,
- Fig. 9: eine Ausbildung des Absorbers nach dem Gegenstromprinzip,
- Fig. 10: den Absorber der Fig. 9 im Querschnitt.

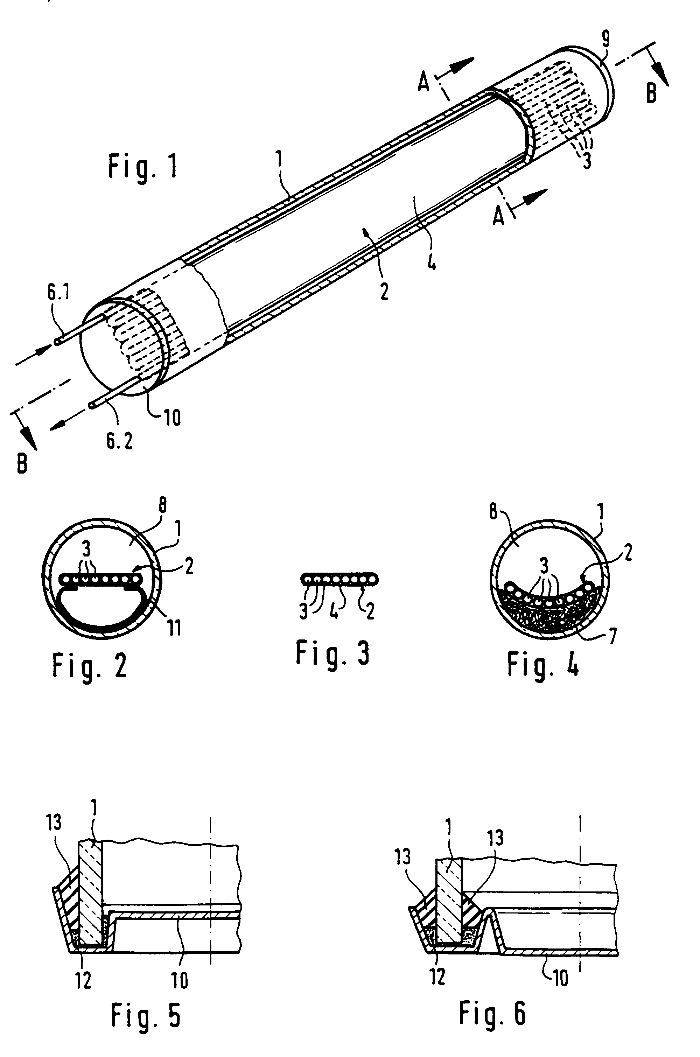

Der in Fig. 1 dargestellte Sonnenkollektor besteht aus einer für Sonnenstrahlung durchlässigen Röhre (1), in welcher sich in Längsrichtung ein Absorber (2) erstreckt. Der Absorber (2) besteht, wie sich insbesondere der Fig. 2, 3 und 4 entnehmen läßt, aus einer Vielzahl parallel angeordneter feiner Röhrchen (3) aus Kupfer, welche das Wärmeübertragungsmedium führen. Die Röhrchen (3) besitzen einen Außendurchmesser von ca. 2 mm und eine Wandstärke von ca. 0,2 mm. Wie insbesondere der Fig. 3 zu entnehmen ist, sind die Röhrchen(3) durch eine hoch selektiv beschichtete Absorptionsfolie (4) miteinander verbunden. Beispielsweise hat sich die sog. Maxsorbfolie der Fa. Maxsorb, eine Folie mit einer Beschichung Nickeloxid auf Nickel, sehr gut bewährt. Der Absorber (2) wird durch ein nicht dargestelltes Federelement zwischen den Deckeln (9, 10) gespannt. Hierdurch werden Thermospannungen, bedingt durch Längenausdehnungen, ausgeglichen. Der Raum unter dem Absorber (2) kann mit einer thermischen Dämmung (7), beispielsweise aus Glaswolle, gefüllt sein, wie es in Fig. 4 dargestellt ist. Der Gasraum (8) kann entweder evakuiert sein oder mit einem der genannten Gase, auch unter Überdruck gefüllt sein. Ist der Sonnenkollektor mit einem Gas gefüllt, so kann er vorteilhaft zumindest an dem Ende, durch welches die Leitungen (6.1, 6.2) für das Wärmeübertragungsmedium geführt werden, durch einen Deckel (10) diffusionsdicht verschlossen sein. Die andere Seite kann auch durch einen angeschmolzenen Glasdeckel (9) verschlossen werden. Die Absorberfläche (2) muß nicht eben sein, wie in Fig. 2 dargestellt, sondern sie kann auch, wie in Fig. 4 ersichtlich, konkav ausgebildet sein. Hierdurch wird das Sonnenlicht besonders gut ausgenutzt. Es ist jedoch auch möglich, die Absorberfläche (2) konvex auszubilden, um den Gasraum (8) klein zu halten und so die Wärmeleitung durch Konvektion zu verringern. Es ist ferner vorgesehen, daß an dem unteren, der direkten Sonneinstrahlung abgewandten Seite des Sonnenkollektors an dessen Innenseite eine Folie (13) angeordnet ist, was in Fig. 2 beispielhaft dargestellt ist. Die Folie (11) ist für die Sonnenstrahlung durchlässig, aber für Wärmestrahlung nicht oder nur gering durchlässig. Die Folie (11) kann in der Röhre (1) nur durch die Spannung der gebogenen Folie (11) selbst oder beispielsweise durch eine Verklebung oder eine zusätzliche Verspannung am Gehäuse des Sonnenkollektors angebracht sein. Die Folie (11) ist vorteilhaft an den Enden gebogen, die parallel zur Längsrichtung der Röhre (1) verlaufen und der Absorber (2) liegt auf der so gebildeten Fläche an den Enden der Folie (11) auf. Die Fläche dient so als Lagerung bzw. Stütze für den Absorber (2). Die Biegung der Folie (13) kann in Richtung der Mittelachse der der Röhre (1) oder in entgegengesetzter Richtung erfolgen, wobei im letzteren Fall die Folie in vorteilhafter Weise an den Innenfläche der Röhre (1) stärker verspannt ist.

Die Fig. 5 und Fig. 6 zeigen zwei Ausbildungsformen für die erfindungsgemäße Verklebung zwischen Deckel (10) und einer gasgefüllten Röhre (1). Der Deckel (10) wird hierbei so gestaltet, daß er die Röhre (1) an der Verbindungsstelle innen und außen umfaßt. An der Stoßstelle wird gemäß der Erfindung ein Butylkleber (12) angebracht. Nach dessen Aushärtung wird auf der Außenseite der Röhre (1) eine Silikondichtung (12) als Stütze und Abdichtung gegen Witterungseinflüsse angebracht. Diese gewährleistet eine sichere Verbindung zwischen Deckel (10) und Röhre (1), denn auch bei höheren Temperaturen wird so eine ausreichende Haftung zwischen Deckel (10) und Röhre (1) erreicht. Die Kombination aus Butylkleber (12) und Silikondichtung (13) ist besonders geeignet für einen Deckel (10) aus Edelstahl. Um eine diffusionsdichte Verbindung zu gewährleisten, sollte der Butylkleber (12) möglichst stark verpreßt sein. Daher ist es von Vorteil, zwischen dem Deckel (10) und der Röhre (1) einen Einlegering anzuordnen, der die Preßkraft auf den Butylkleber (12) überträgt und gleichzeitig eine weitere Sperre für Diffusion bedeutet. Bei einem Deckel (10) aus einem anderen Werkstoff bzw. aus einem anderen Metall kann eine andere Kombination von Kleber (12) und Dichtmasse (13) vorteilhaft sein, falls dadurch eine ausreichende Diffusionsdichtigkeit gewährleistet wird.

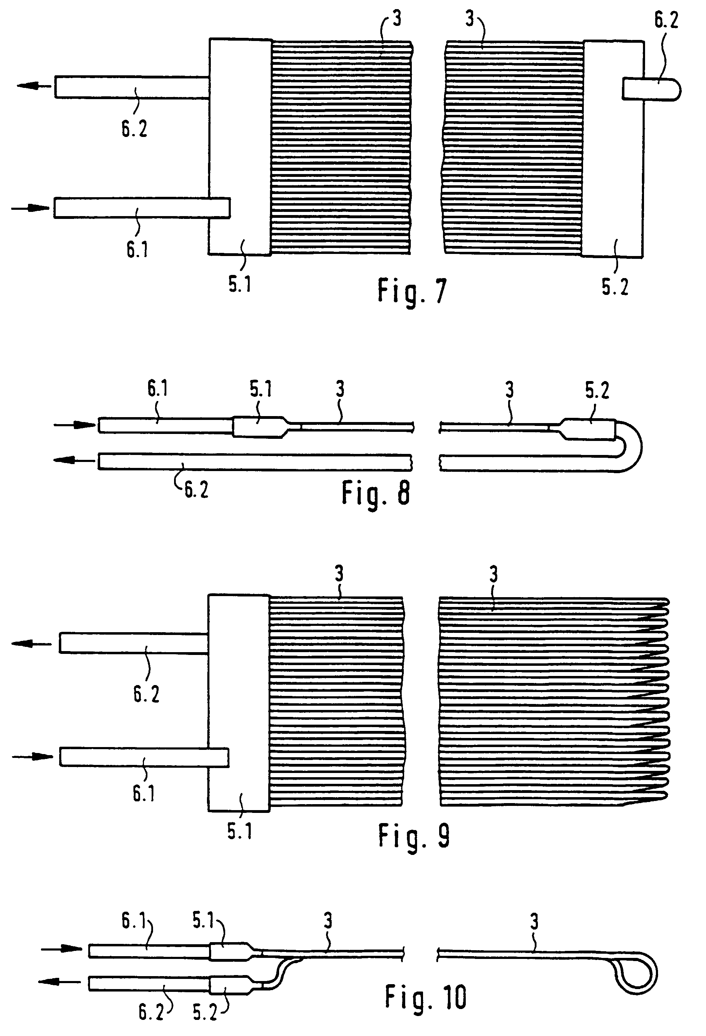

Wie in Fig. 7 und Fig. 8 dargestellt ist, werden die Röhrchen (3) an den Enden des Kollektors durch Sammler (5.1, 5.2) zusammengeführt. Das Wärmeübertragungsmedium wird mittels einer Leitung (6.1), die mit dem Sammler (5.1) verbunden ist, in den Sonnenkollektor hereingeführt und durch eine zweite Leitung (6.2), die mit dem Sammler (5.2) verbunden ist, wieder herausgeführt. Hierzu ist der Deckel (10) mit Durchführungen versehen. Die Röhrchen (3) werden an deren Eingang und Ausgang an die Sammler (5.1, 5.2) angelötet. In Fig. 9 und Fig. 10 ist eine Ausführungsform des Absorbers dargestellt, bei der das Wärmeübertragungsmedium nach dem Gegenstromprinzip den Absorber (2) durchströmt. Die Sammler (5.1, 5.2) sind hier nur an einer Seite des Kollektors angeordnet. Das bedeutet, jedes einzelne Röhrchen (3) wird, ausgehend vom Sammler (5.1) für das über Leitung (6.1) einströmmende Wärmeübertragungsmedium, umgelenkt und dem Sammler (5.2) zugeführt, wodurch das erwärmte Wärmeübertragungsmedium über die daran anschließende Leitung (6.2) den Kollektor wieder verläßt.

## Patentansprüche

1. Thermischer Sonnenkollektor (1), der ein Röhrenkollektor mit für Sonnenlicht transparenten Röhren mit einem Absorber (2), in welchem sich ein Wärmebertragungsmediums befindet ist,
dadurch gekennzeichnet,
daß diese Röhren des thermischen Sonnenkollektors (1) mit einem Deckel (10) abgeschlossen und diffusionsdicht verklebt sind und der thermische Sonnenkollektor in seinem Innenraum mit einem Füllgas befüllt ist, welches aus einer oder mehreren Komponenten aus einer Gruppe von Krypton, Xenon, Argon und Kohlendioxid besteht.

2. Thermischer Sonnenkollektor nach Anspruch 1,
dadurch gekennzeichnet,
daß die diffusionsdichte Verklebung der Bauteile des thermischen Sonnenkollektors durch einen Butylkleber (12) erfolgt.

3. Thermischer Sonnenkollektor nach Anspruch 1,
dadurch gekennzeichnet,
daß die diffusionsdichte Verklebung der Bauteile des thermischen Sonnenkollektors durch einen Butylkleber (12) erfolgt und daß die Verklebung durch eine Silikondichtung (13) gestützt wird.

4. Thermischer Sonnenkollektor nach einem der Ansprüche 1 bis 3,
dadurch gekennzeichnet,
dass der Absorber (2) aus einer Vielzahl parallel nebeneinander angeordneten Röhrchen (3) besteht, die in einem wärmeschlüssigen Kontakt miteinander stehen und die durch eine Absorberfolie (4) miteinander verbunden sind und/oder eine absorbierende Beschichtung aufweisen.

5. Thermischer Sonnenkollektor nach einem der Ansprüche 1 bis 4,
dadurch gekennzeichnet,
daß an dem unteren, der direkten Sonneinstrahlung abgewandten Seite des Sonnenkollektors an dessen Innenseite eine Folie (11) angeordnet ist, welche für die Sonnenstrahlung durchlässig, aber für Wärmestrahlung nicht oder nur gering durchlässig ist.

6. Thermischer Sonnenkollektor nach Anspruch 5,
dadurch gekennzeichnet,
daß die Folie (11) an den Enden mindestens einmal gebogen bzw. geknickt ist und daß der Absorber (2) auf den Enden der Folie (11) aufliegt.

7. Thermischer Sonnenkollektor nach einem der Ansprüche 4 bis 6,
dadurch gekennzeichnet,
daß die Absorberfläche (2) konkav oder konvex ausgebildet ist.

8. Thermischer Sonnenkollektor nach einem der Ansprüche 4 bis 7,
dadurch gekennzeichnet,
daß der Raum unter dem Absorber (2) mit einer thermischen Dämmung (7) gefüllt ist.

## Claims

1. Thermal Solar-collector, that represents a tube transparent for sunlight, is marked through it, that these tubes of the thermal collector with a cover locked and has stuck together diffusion-densely and the interior of the solar-collector with gas filled, that consists of one or several components of a group of krypton, Xeneon, argon and carbon dioxide is.

2. Thermal solar-collector after claim 1,
through it, that takes place the diffusion-dense stick together of the prefabricated parts of the thermal solar-collector through a butyl-glue (12) happens.

3. Thermal solar-collector after claim 1
through it, that takes place the diffusion-dense stick together of the prefabricated parts of the thermal solar-collector through a butyl-glue (12) happens and that protected the glue through a silicone-poem ( 13 ).

4. Thermal solar-collector segments after claim 1 - 3
through it marked, that the thermal solar-collector is bild with an absorber ( 2 ) which is a heat transfer-medium in it and that
Absorbers (2) naus of a multiplicity parallel side by side lying small tubes (3) exists, that in a heat-technical contact together stands, and that through an absorber-foil ( 4) together interconnected is and / or an absorbent coating shows.

5. Thermal solar-collektor segments after one of the claims 1 to 4,
through it marked,
that at the turned away side of the solar-collector to the sun on the inside of the collector a foil (11), that is permeable for the sunbathe-radiation, but is arranged for thermal radiation, not or only low through leaves.

6. Thermal solar-collektor segments after claim 5
through it marked that bent the foil (11) at the ends at least once or is glum and that the absorber (2) on the ends of the foil (11) lays.

7. Thermal solar-collector after one of the claims 4 - 6
through it marked,
that the absorber-surface (2) concave or convex is molded.

8. Thermal solar-collector segments after one of the claims 4 - 7
through it marked,
that the area under the absorber (2) with a thermal insolation (7) filled is.

## Revendications

1. Le capteur de s'exposé à la soleil thermique, qui représente un conduit transparent pour lumière du soleil, est marqué par cela,
ceci ces conduits du capteur thermique avec un couvercle a fermé et a agglutiné diffusion-hermétiquement et l'intérieur du capteur solaire remplie un gaz, qui consiste en un ou plusieurs composantes d'un groupe du krypton, Xeneon, argon et gaz carbonique.

2. Le capteur solaire thermique après la réclamation 1,
par le, qui résulte l'agglutination diffusion-dense des composants du capteur de s'exposé à la soleil thermique par un colle de Butyl (12), marqué.

3. Le capteur solaire thermique après la réclamation 1
par le, qui résulte l'agglutination diffusion-dense des composants du capteur de s'exposé à la soleil thermique par un colle de Butyl (12), marqué et que protégé l'agglutination par une poésie de silicone (13) devient.

4. Le capteur solaire thermique après la réclamation 1- 3
par cela marqué, que le capteur de s'exposé à la soleil thermique équipe avec un absorbeur ( 2 ) dans que trouve un média de transfert de chaleur à s'et que ceci absorbeur (2) compose de une multiplicité parallèlement côte-à-côte petits tuyaux couchés (3), qui sont ensemble dans un contact chaleur-technique, existe et que sont ensemble conjoint par une feuille d'absorbeur (4) et / ou une couche absorbante montre.

5. Le Capteur solaire thermique après un des réclamations 1 - 4,
par cela marqué,
ceci au côté détourné du capteur solaire au soleil sur le côté intérieur du capteur une feuille (11) est dispose qui est pénétrable pour la radiation solaire, mais ceci la radiation thermique pas, ou seulement petit laisse passer.

6. Le capteur solaire de s'exposé à la soleil après la réclamation (5) par cela marqué, que la feuille (11) est recourbées, ou afflige au moins une fois à les fins, et que l' absorbeur (2) est pose sur les fins de la feuille (11).

7. Le capteur solaire thermique après un des réclamations 4- 6 par cela marqué,
ceci la surface d'absorbeur (2) est formé concave ou convexe .

8. Le capteur solaire après un des réclamations 4-7 par cela marqué,
ceci l'espace sous l'absorbeur (2) est farci avec une isolation thermique (7) .
